# EUROPEAN PATENT SPECIFICATION

(11) **EP 3 193 772 B1**
(45) Date of publication and mention of the grant of the patent: **17.03.2021**
(21) Application number: 14777392.3
(22) Date of filing: 19.09.2014
(51) Int. Cl.: A61C 1/08, A61C 8/00

(54) **KIT FOR THE IMPLANTATION OF A DENTAL IMPLANT**
KIT ZUR IMPLANTATION EINES ZAHNIMPLANTATS
KIT POUR L'IMPLANTATION D'UN IMPLANT DENTAIRE

(43) Date of publication of application: 26.07.2017
(73) Proprietor: Stichting VUmc, 1081 HV Amsterdam (NL)
(72) Inventor: KOOPS, Daniël, NL-1084 HV Amsterdam (NL)
(74) Representative: EP&C
(86) International application number: PCT/NL2014/050647
(87) International publication number: WO 2016/043578

(56) References cited:
- CN-U- 202 288 506
- FR-A1- 2 825 614
- US-A1- 2009 263 764
- US-A1- 2014 120 495
- US-B2- 8 388 342

## Description

The invention relates to a kit for the implantation of a dental implant.

Dental implants are placed in a person's upper or lower jaw so as to form an anchorage for fixing a prosthetic element in the oral cavity such as for example a crown, what is called a bridge or a set of dentures, either or not complete. When positioning a dental implant in a jaw, a bore hole must be made in the jaw to fix the dental implant therein. Normally, the implant is threaded and thus it is fixed in the bore hole by screwing it into the bore hole.

The selection of the position and orientation of the implant in the jaw depends among others on the shape and structure of the jaw. Especially the anatomical bone structure of the jaw must be taken into account, as well as the exact location of nerve bundles and blood vessels. Thus, when making a bore hole in the jaw or when putting in the implant, one must avoid damaging the nerve bundles and blood vessels. Further, one must make sure that the volume of the bone round the implant is sufficiently large so as to be able to strongly anchor the implant in the jaw.

The desired position of an implant may be determined by taking an image of the jaw and the nerve bundles and blood vessels that are present by means of an imaging system such as for example a CT scan. Based on this image, a position is selected for the implant which is as optimal as possible.

In order to be able to make the bore hole for providing the implant in the jaw with great accuracy according to the selected position and orientation assisted by computer planning software (guided surgery), a custom-made template may be made according to techniques known as such. Such techniques for example are based on a plaster mould, the use of CAD CAM or rapid prototyping. Said template is then positioned on the jaw and possibly fixed to it in a detachable manner. Then, a bore hole is made in the jaw whereby the bore is guided through the template, and the implant together with what is called an implant guide is fixed in said bore hole in the jaw via the template.

An implant guide, also called "implant holder" or "fixture driver" among professionals, comprises a cylindrical body which is at a distal thereof fixed in a detachable manner to the dental implant. Such an implant guide forms an extension piece for the dental implant so as to guide it through implantation channel of the template into the jaw.

When providing an implant, it is of major importance that not only the actual position and orientation of the provided implant correspond almost exactly to the desired pre-planned position and orientation thereof, but it is also of paramount importance that it is provided in the jaw at an exact depth. If implants are not fixed in a jaw exactly in the desired, pre-determined position, depth or orientation, it may be practically impossible to fix the prefabricated prosthesis to the implants.

Document US 2014/120495 A1 discloses a kit for use for the implantation of a dental implant, comprising:
- an implant guide to be detachably attached to a dental implant, said implant guide comprising a cylindrical body provided with a plurality of circumferential grooves;
- a template to be arranged in the jaw, said template being provided with implantation channels to guide the cylindrical body of said implant guide; and
- a C-shaped stop member or C-snap ring to be coupled in one of the grooves to set a depth stop.

US 8,388,342 provides a kit for the implantation of a dental implant comprising a template, an implant guide and a blocking element. The template comprises an implantation channel and an additional channel which opens at the outer surface of the template on the one hand, and at least partly in the implantation channel on the other hand. The longitudinal axis of the additional channel extends practically at right angles to the longitudinal axis of the implantation channel. This additional channel is configured to receive the blocking element which is formed as an elongate cylindrical element. The blocking element can be moved into the additional channel, such that it extends at least partly in the implantation channel. The implant guide is provided with a fixing part, e.g. an opening, which works in conjunction with the blocking element so as to fix the implant guide in a pre-determined position in the template.

During implantation of the dental implant, the combination of the implant guide and the dental implant should be moved through the implantation channel and into the jaw, while at the same time pressure should be exerted on the blocking element to ensure that the blocking element will move in the fixing part, e.g. an opening, as soon as this fixing part is aligned with the additional channel. When the fixing part is aligned with the additional channel the blocking element can be pushed into the fixing part which confirms the correct implantation depth of the dental implant.

A drawback of this kit for implantation of a dental implant is that the user should simultaneously move the dental implant into the jaw and exert pressure on the blocking element to ensure that the blocking element enters the fixing part as soon as the fixing part is aligned with the additional channel.

Furthermore, when the blocking element does not enter the fixing part when the fixing part is aligned with the additional channel, it is possible to move the dental implant further into jaw which may in result in too deep implantation which may also cause damage to the jaw.

It is an object of the invention to provide an improved kit which ensures that a dental implant is placed at the desired implantation depth.

The invention provides a kit as claimed in claim 1.

The kit comprises a template, an implant guide and a stop element. The kit is configured to implant a dental implant in the jaw of a person. The dental implant may be part of the kit.

The template is configured to be arranged at a predetermined location with respect to a jaw. Typically, the template will be designed such that the template fits on the jaw and or teeth of the patient in one unique easily recognizable location such that there is a fixed positional relationship between the template and the jaw in which a dental implant should be implanted. The template comprises at least one implantation channel to guide the cylindrical body of the implant guide in a desired implantation direction during implantation of a dental implant in the jaw.

At the proximal end of the implantation channel, i.e. at the side opposite from the jaw in which the dental implant is placed, a stop surface is provided.

The dental implant may detachably be mounted at the distal end of the implant guide. The implant guide comprises a cylindrical body having a diameter substantially the same or slightly smaller than the implantation channel such that the implant guide is guided by the implantation channel in the desired implantation direction. Thus, the implantation channel of the template in combination with the cylindrical body of the implant guide ensures that the dental implant enters the jaw in the desired implantation direction.

To ensure that the dental implant is placed at the desired implantation depth in the jaw, the cylindrical body comprises a cylindrical outer surface and a circumferential groove in the outer surface, and the kit further comprises a stop element to cooperate with the implant guide, in particular the outer surface and the groove.

The stop element comprises a first part and a second part, wherein the first part and the second part are configured to be movable between a first state, in which the first part and the second part are spaced at a first distance, and a second state, in which the first part and the second part are spaced at a second distance, wherein the first distance is smaller than the second distance. The first and second parts are biased to the first state. Biasing means, such as springs may be provided to bias the first part and/or second part to the first state, but the biasing force may also be provided by the material of the stop element itself. For example, the stop element may at least partially be made of resilient material.

In an embodiment, the first part and the second part are arc shaped having a radius substantially corresponding to a radius of the groove. Extension parts may be provided in the stop element which can be manipulated by fingers or a tool in order to move the first and second parts from the first state to the second state.

In a specific embodiment, the stop element comprises a connection part connecting the first part and the second part, wherein the connection part, the first part and the second part form an open ring shape having, in the first state, a diameter substantially corresponding to or larger than a diameter of the groove bottom, and smaller than the outer cylindrical surface of the implant guide.

The second distance is the same or larger than a distance between diametrically opposite sides of the outer surface of the implant guide, such that, before implantation, the first part and the second part can be arranged, in the second state, on diametrically opposite sides of the outer surface, and that during movement in the implantation direction of the dental implant into the jaw, the stop surface of the implantation channel may push the stop element towards the groove until the groove will allow the first and second part to move towards the first state so that the stop element will be caught by the groove and further movement of the implant guide in the implantation direction will be prevented.

The advantage of the stop element is that the stop element will automatically be pushed by the stop surface towards and into the groove of the implant guide when the implant guide is moved through the implantation channel to the desired implantation depth.

Once the distal end of the stop element will reach the distal groove side of the groove, the first and second part can move to the first state and snap into the groove. The snap movement of the first and second parts into the groove may provide a sound, for example a click, which is a clear signal that the dental implant has reached the desired depth.

Once the first and second parts are positioned in the groove, the dental implant may not be moved substantially further into the jaw since the first and second parts in the groove prevent such movement. This can also be felt by the user and used as a signal that the desired implantation depth has been reached.

Further, it is remarked that in practice, typically caused by some flexing of the template, the dental implant may be moved too far into the jaw. It is desirable to prevent such situation.

In the stop element and the implant guide, the first distance between the first part and the second part, determined at diametrically opposite sides of the groove, is larger than a groove diameter of the groove bottom of the groove. The stop element will, in the first state, not be clamped on the groove bottom, and there will be some play between the groove and the stop element. This means that the stop element can be moved with respect to the groove, when the stop element is positioned in the groove.

As a result, it can easily be determined whether the dental implant is moved too far into the jaw by checking whether there is some movement possible of the stop element in the groove. When there is some movement possible between the stop element and the groove, this indicates that the stop element is not clamped and the dental implant is arranged at the desired implantation depth in the jaw. When there is no movement possible between the stop element and the groove, the stop element is clamped between the proximal groove side of the groove and the stop surface of the template as a result of the dental implant being moved too far into the jaw. By moving the dental implant back, for example by screwing in the opposite direction, until there is again some possible, the dental implant can be placed at the desired implantation depth. In this way any flexibility of the template can be taken into account, and as a result the design restrictions of the template may be less stringent. Still, the correct implantation depth of the dental implant can very accurately and reliably be determined.

There is further disclosed a method for providing a template for use in placement of a dental implant in the jaw of a patient using the kit of any of the appended claims, comprising the steps of:
determining a model of the jaw in which the dental implant should be implanted;
determining a desired implantation direction and implantation depth of the dental implant;
designing the template, wherein the step of designing comprises the steps of:
   modelling a template shape that can be arranged at a predetermined location with respect to a jaw;
   modelling at least one implantation channel in the template configured to guide a cylindrical body of an implant guide in the desired implantation direction; and
   modelling a stop surface configured to limit movement of the dental implant into the jaw to the desired implantation depth, and
manufacturing the template.

Further details and advantages of an embodiment of the invention will now be described, whereby reference will be made to the accompanying drawings, in which:
Fig. 1 shows, schematically, a template of an embodiment of a kit according to the invention;
Fig. 2 shows, schematically, an implant guide of an embodiment of a kit according to the invention;
Fig. 3 shows, schematically, a dental implant of an embodiment of a kit according to the invention;
Fig. 4 shows, schematically, a stop element of an embodiment of a kit according to the invention; and
Figs. 5-7 show steps of the implantation of a dental implant using the embodiment of the kit shown in Figures 1-4.

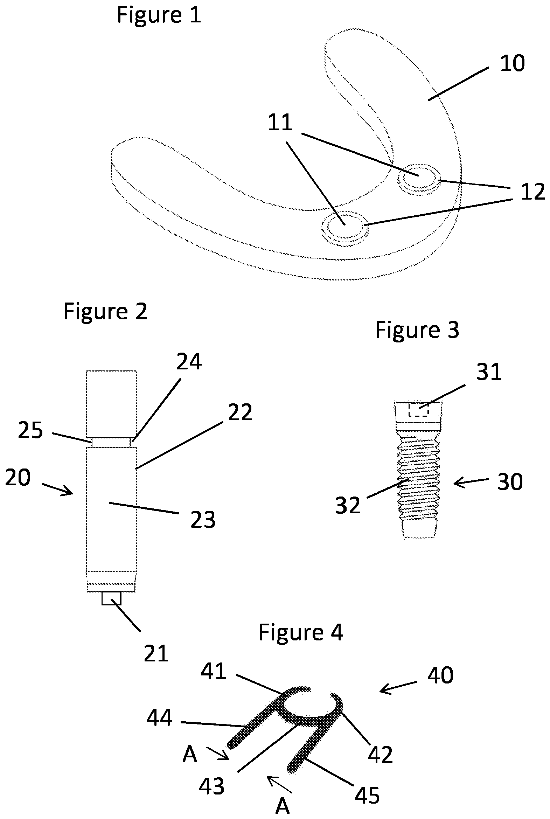

The present invention relates to a kit for the implantation of a dental implant in the jaw of a patient. The parts of this kit are separately shown in Figures 1-4, respectively.

Figure 1 shows a template 10 to be used during implantation of a dental implant in a jaw. The template is preferably made patient specific in such a way that the template can easily be arranged in a unique fixed positional relationship with respect to the jaw, using patient specific characteristic features, such as size and position of teeth or preinstalled references e.g. (mini-)implants.

The template may, during the implantation procedure temporarily be fixed to the jaw to ensure that this positional relationship is maintained during the implantation procedure.

The template 10 may be manufactured on the basis of a model, in particular a computer model obtained by imaging techniques or conventional techniques. Any suitable technique, such as a plaster mould, the use of CAD CAM, rapid prototyping or 3D printing may be used to manufacture the template 10.

The template 10 comprises a number of implantation channels 11 which define a desired implantation direction of a dental implant to be implanted in the jaw. The implantation channels 11 are typically straight cylindrical channels running through the template 10. The location and direction of the implantation channels 11 are also typically patient specific and therefore designed for a specific patient.

The template comprises a jaw side directed to the jaw during implantation and an opposite side which faces away from the jaw when the template is arranged in the correct implantation position. At the end of each implantation channel 11 at the opposite side of the implantation channel, i.e. the proximal end of the implantation channel seen in the implantation direction, stop surfaces 12 are provided. These stop surfaces 12 are configured to cooperate with stop elements 40 as will be described hereinafter, and define the implantation depth of the dental implants 30.

Figure 2 shows an implant guide 20 which is used to correctly implant a dental implant into a jaw. Figure 3 shows a dental implant 30. The dental implant 30 comprises a screw thread 32 to screw the dental implant 30 into a predrilled bore in the jaw in which it is placed. Any other fixation technique for the dental implant in the jaw, such as cementing or locking rims may also be used.

During implantation, the implant guide 20 and the dental implant 30 are connected to each other and placed into the jaw by advancing the combination of implant guide 20 and dental implant 30 through the respective implantation channel 11 of the template 10.

The implant guide 20 comprises a proximal end and a distal end. At the distal end of the implant guide 20 a connection device 21 is provided which is configured to cooperate with a connection device 31 of the dental implant 30 to detachably connect the dental implant 30 to the implant guide 20, at least during implantation of the dental implant 30 in the jaw. Connection devices 21, 31 to connect the dental implant 30 and the implant guide 20 are known in the art.

The implant guide 20 further comprises a cylindrical body 22 having a diameter which is substantially the same or slightly smaller than a diameter of the respective implantation channel 11 to ensure that a longitudinal axis of the implant guide 20 and a longitudinal axis of the implantation channel 11 remain aligned during implantation of the dental implant, therewith ensuring a correct implantation direction of the dental implant.

The cylindrical body 22 comprises an outer surface 23 in which a circumferential groove 24 is provided. The groove 24 has a substantially rectangular cross section having a groove bottom 25 and substantially straight groove sides.

Figure 4 shows a stop element 40 of the kit comprising a first part 41 and a second part 42. The first part 41 and the second part 42 are connected to each other by a connection part 43. The first part 41, the second part 42 and the connection part 43 together form an open ring shape with an open ring inner diameter which is larger than the diameter of the groove bottom 25 but smaller than the diameter of the outer surface 23. The height of the first part 41, the second part 42 and the connection part 43 is smaller than the width of the groove 24 such that the open ring shape, when desired, can be arranged, at least partially, in the groove 24 of the implant guide 20.

The stop element 40 is made of resilient material, for example resilient plastics material or resilient metal, such that the first part 41 and the second part 42 can be moved from a relaxed first state, as shown in Figure 4, to a second extended state in which a distance between the first part 41 and the second part 42 is increased to a distance larger than the diameter of the outer surface 23 of the implant guide 20. Thus, in this second state the stop element 40 can be placed on this outer surface 23, in particular at a distal side of the groove 24.

The stop element 40 comprises a first extension part 44 and a second extension part 45 which facilitate the movement of the first part 41 and second part 42 from the first state to the second state by a movement of the first extension part 44 and the second extension part 45 towards each other, as indicated by arrows A. This movement A can easily be carried out by pinching the first extension part 44 and second extension part 45 towards each other by thumb and index finger of a user. By pinching the first extension part 44 and the second extension part 45 towards each other, the first part 41 and second part 42 can be moved over the outer surface 23 so that the stop element is clamped on the outer surface 23.

It is remarked that since the template 10 may be custom made for each patient, the implant guide 20, the dental implant 30 and the stop element 40 may be standard elements, that can be provided in one or more standard sizes.

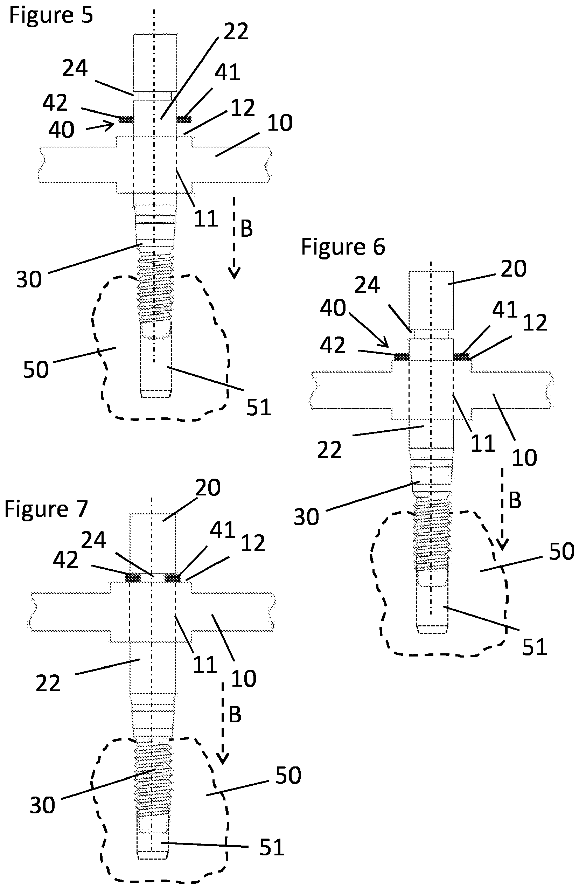

The use of the kit comprising the template 10, the implant guide 20, the dental implant 30 and the stop element 40, will now be described with reference to Figures 5, 6 and 7.

Figure 5 shows the combination of implant guide 20 and dental implant 30 during the first part of the implantation of the dental implant 30. The template 10 was designed and manufactured in order to provide implantation channels 11 configured to drill bore holes in the jaw and to subsequently guide implant guides 20 to correctly place dental implants 30 into the respective bore holes 51.

Further, the stop surfaces 12 of the template 10 were designed such that when the respective stop element 40 is arranged in the groove 24 of the implant guide 20 and contacts the stop surface 12 of the template 10, the desired implantation depth of the dental implant 30 is reached.

In Figure 5, the template 10 is placed in its desired unique position with respect to a jaw 50, such that the implantation channel 11 in the template 20 is arranged to maintain the longitudinal axis of the dental implant 30 in the desired implantation direction B and the dental implant 30 is correctly moved into the predrilled bore hole 51.

The stop element 40 is arranged with its first part 41 and second part 42 in the second, extended, state on the outer surface 23 of the implant guide 20 at a position distal from the groove 24. In Figure 5, the stop surface 12 is still spaced from the groove 24 and the stop element 40, indicating that the desired implantation depth has not yet been reached.

Figure 6 shows the combination of implant guide 20 and dental implant 30 advanced further into the bore hole 51. The stop element 40 is still in the same position with respect to the implant guide 20, but the stop element 40 has moved up to the stop surface 12 on the template 11 and is in contact with the stop surface 12.

When the implant guide 20 is moved further in the implantation direction B, the stop surface 12 will push the stop element 40 in proximal direction to slide over the outer surface 23 in proximal direction of the implant guide 20, i.e. in the direction of the groove 24, until the stop element 40 reaches the groove 24. When the distal side of the stop element 40 moves past the distal side of the groove 24, the outer surface 23 will no longer hold the stop element 40 in the extended state, and the stop element may move into the groove 24 and to the first, relaxed, state.

Figure 7 shows this position of the implant guide 20, in which the stop element 40 has moved into the groove 24 which indicates that the desired implantation depth has been reached.

The use of the stop element 40 has the advantage that during the movement of the implant guide 20 in the implantation direction, the stop element 40 will automatically move into the groove and indicate that the desired implantation depth has been reached. No separate action is required.

Further, movement of the stop element 40 from the second state to the first state may produce a clicking or other audible signal indicating that the desired implantation depth has been reached. This facilitates the use of the kit, in particular to determine whether the desired implantation depth has been reached.

Also, it can easily be seen by the user whether the stop element 40 is positioned in the groove 24, as the movement from the second state to the first state results in a substantial diameter change of the stop element 40. This can for example be seen by comparison of the difference in diameter of the stop element 40 with the diameter of the stop surface 12 of Figures 6 and 7.

Another important advantage of the stop element 40 moving into the groove is that the dental implant cannot be moved substantially further into the jaw 50 since the stop element 40 positioned in the groove 24 will prevent further movement of the implant guide 20 in the implantation direction B.

It is remarked that, in practice, the shape and the material of the template 10 may have some flexibility which can result in a dental implant being moved too far into the bore hole 50 since the template 10 bends somewhat in the implantation direction B as a result of the forces exerted on the template 10 during screwing of the dental implant 30 into the jaw 50.

To determine more accurately whether the dental implant 30 is positioned at the desired implantation depth, the stop element 40 is provided, in its first, relaxed, state with a diameter, i.e. the distance between the first part 41 and the second part 42, which is larger than the diameter of groove bottom 25. This results in some play between the stop element 40 and the groove 24 when the stop element 40 is positioned in the groove 24.

When the implant guide 20 and the dental implant 30 are moved too far into the jaw 50, the stop element 40 will be clamped between the stop surface 12 and the proximal groove side of the groove 24, and, as a result, the stop element 40 will no longer have some play. The presence of play can easily be determined by the user, for example by pushing against one of the first and second extension parts 44, 45.

When the stop element 40 has moved into the groove 24, the user may push against one of the first and second extension parts 44, 45. When the stop element 40 will somewhat move, this indicates that the dental implant is positioned at the desired implantation depth. When no movement of the stop element 40 in the groove 24 is possible, the dental implant has been moved too far into the bore hole 51, for example due to flexing of the template 10. By screwing the dental implant 30 slowly in the reverse direction such that it moves out of the bore hole 51 until some play can be determined between the stop element 40 and the groove 25, the dental implant 30 can be moved back to the desired implantation depth.

Hereinabove an embodiment of a kit for use in the implantation of a dental implant in a jaw has been described.

## Claims

1. Kit for use for the implantation of a dental implant (30), comprising:
an implant guide (20) comprising a proximal end and a distal end, wherein the distal end is configured to be detachably attached to a dental implant, said implant guide comprising a cylindrical body (22), wherein the cylindrical body comprises a cylindrical outer surface (23) and a circumferential groove (24) in the outer surface, and
a template (10) configured to be arranged at a predetermined location with respect to a jaw, wherein the template comprises at least one implantation channel (11) to guide the cylindrical body of the implant guide in a desired implantation direction during implantation of a dental implant in the jaw, and a stop surface (12) at an end of the implantation channel,
wherein the kit comprises a stop element (40) comprising a first part (41) and a second part (42), wherein the first part and the second part are configured to be movable between a first state, in which the first part and the second part are spaced at a first distance, and a second state, in which the first part and the second part are spaced at a second distance, wherein the first distance is smaller than the second distance, and wherein the first and second parts are biased to the first state, wherein the second distance is the same or larger than a distance between diametrically opposite sides of the outer surface of the implant guide, such that, before implantation, the first part and the second part can be arranged, in the second state, on diametrically opposite sides of the outer surface, and that during movement in the implantation direction of the dental implant (30) into the jaw, the stop surface (12) of the implantation channel (11) will push the stop element (40) towards the groove (24) until the groove will allow the first and second part to move towards the first state and the stop element will be caught by the groove, therewith blocking further movement of the implant guide (20) in the implantation direction,
wherein the template (10) is patient specific and wherein a location of the stop surface (12) is selected to define a desired implantation depth of a dental implant (30),
wherein the groove (24) comprises a groove bottom, and wherein the first distance between the first part and the second part is larger than a groove diameter of the groove bottom, and
wherein the first part (41) and the second part (42) have a height which is smaller than a groove width of the groove,
wherein the height and the first distance are selected such that clearance of the first part (41) and second part (42) in the groove (24) indicates that the dental implant (30) is arranged at the desired implantation depth and a clamped position of the first part (41) and second part (42) in the groove (24) indicates that the dental implant (30) is moved too far into the jaw.

2. Kit as claimed in any of the preceding claims, wherein the stop element (40) comprises a connection part (43) connecting the first part (41) and the second part (42).

3. Kit as claimed in the preceding claim, wherein the connection part, the first part (41) and the second part form (42) an open ring shape.

4. Kit as claimed in claim 2 or 3, wherein the stop element (40) comprises a first extension (44) extending from the first part (41) and a second extension (45) extending from the second part (42), wherein a movement of the first extension towards the second extension results in the first and second part moving from the first state to the second state.

5. Kit as claimed in any of the preceding claims, wherein the stop element (40) is made of resilient material.

6. Kit as claimed in any of the preceding claims, wherein the groove (24) has a substantially rectangular cross section.

7. Kit as claimed in any of the preceding claims, wherein the first part (41) and the second part (42) each have a substantially rectangular cross section.

8. Kit as claimed in any of the preceding claims, comprising a dental implant (30) to be placed in the jaw of a patient.

9. Kit as claimed in any of the preceding claims, wherein the stop element (40) and implantation guide (20) are provided in one or more standard sizes.

## Patentansprüche

1. Kit zur Verwendung für die Implantation eines Zahnimplantats (30), umfassend:
eine Implantatführung (20), die ein proximales Ende und ein distales Ende umfasst, wobei das distale Ende ausgebildet ist, um abnehmbar an einem Zahnimplantat befestigt zu werden, wobei die Implantatführung einen zylindrischen Körper (22) umfasst, wobei der zylindrische Körper eine zylindrische Außenfläche (23) und eine Umfangsnut (24) in der Außenfläche umfasst, und
eine Schablone (10), die ausgebildet ist, um an einer vorbestimmten Stelle in Bezug auf einen Kiefer angeordnet zu werden, wobei die Schablone mindestens einen Implantationskanal (11) umfasst, um den zylindrischen Körper der Implantatführung während der Implantation eines Zahnimplantats in den Kiefer in einer gewünschten Implantationsrichtung zu führen, und eine Anschlagfläche (12) an einem Ende des Implantationskanals,
wobei das Kit ein Anschlagelement (40) umfasst, das ein erstes Teil (41) und ein zweites Teil (42) umfasst, wobei das erste Teil und das zweite Teil ausgebildet sind, um zwischen einem ersten Zustand, in dem das erste Teil und das zweite Teil in einem ersten Abstand beabstandet sind, und einem zweiten Zustand, in dem das erste Teil und das zweite Teil in einem zweiten Abstand beabstandet sind, beweglich zu sein, wobei der erste Abstand kleiner als der zweite Abstand ist, und wobei das erste und das zweite Teil in den ersten Zustand vorgespannt sind, wobei der zweite Abstand gleich oder größer als ein Abstand zwischen diametral gegenüberliegenden Seiten der Außenfläche der Implantatführung ist, so dass vor der Implantation das erste Teil und das zweite Teil im zweiten Zustand auf diametral gegenüberliegenden Seiten der Außenfläche angeordnet werden können, und dass während der Bewegung in Implantationsrichtung des Zahnimplantats (30) in den Kiefer die Anschlagfläche (12) des Implantationskanals (11) das Anschlagelement (40) in Richtung der Nut (24) drückt, bis die Nut es dem ersten und zweiten Teil ermöglicht, sich in Richtung des ersten Zustands zu bewegen, und das Anschlagelement von der Nut erfasst wird, wodurch eine weitere Bewegung der Implantatführung (20) in der Implantationsrichtung blockiert wird,
wobei die Schablone (10) patientenspezifisch ist und wobei eine Position der Anschlagfläche (12) ausgewählt ist, um eine gewünschte Implantationstiefe eines Zahnimplantats (30) zu definieren,
wobei die Nut (24) einen Nutboden umfasst, und wobei der erste Abstand zwischen dem ersten Teil und dem zweiten Teil größer als ein Nutdurchmesser des Nutbodens ist, und
wobei das erste Teil (41) und das zweite Teil (42) eine Höhe aufweisen, die kleiner als eine Nutbreite der Nut ist,
wobei die Höhe und der erste Abstand so gewählt sind, dass ein Abstand des ersten Teils (41) und des zweiten Teils (42) in der Nut (24) anzeigt, dass das Zahnimplantat (30) in der gewünschten Implantationstiefe angeordnet ist, und eine geklemmte Position des ersten Teils (41) und des zweiten Teils (42) in der Nut (24) anzeigt, dass das Zahnimplantat (30) zu weit in den Kiefer hineinbewegt ist.

2. Kit nach einem der vorhergehenden Ansprüche, wobei das Anschlagelement (40) ein Verbindungsteil (43) umfasst, das das erste Teil (41) und das zweite Teil (42) verbindet.

3. Kit nach dem vorhergehenden Anspruch, wobei das Verbindungsteil, das erste Teil (41) und das zweite Teil (42) eine offene Ringform bilden.

4. Kit nach Anspruch 2 oder 3, wobei das Anschlagelement (40) einen ersten Fortsatz (44) umfasst, der sich von dem ersten Teil (41) erstreckt, und einen zweiten Fortsatz (45), der sich von dem zweiten Teil (42) erstreckt, wobei eine Bewegung des ersten Fortsatzes in Richtung des zweiten Fortsatzes dazu führt, dass sich das erste und zweite Teil von dem ersten Zustand in den zweiten Zustand bewegen.

5. Kit nach einem der vorhergehenden Ansprüche, wobei das Anschlagelement (40) aus einem elastischen Material hergestellt ist.

6. Kit nach einem der vorangehenden Ansprüche, wobei die Nut (24) einen im Wesentlichen rechteckigen Querschnitt aufweist.

7. Kit nach einem der vorhergehenden Ansprüche, wobei das erste Teil (41) und das zweite Teil (42) jeweils einen im Wesentlichen rechteckigen Querschnitt aufweisen.

8. Kit nach einem der vorhergehenden Ansprüche, umfassend ein Zahnimplantat (30), das in den Kiefer eines Patienten eingesetzt wird.

9. Kit nach einem der vorhergehenden Ansprüche, wobei das Anschlagelement (40) und die Implantationsführung (20) in einer oder mehreren Standardgrößen bereitgestellt werden.

## Revendications

1. Kit destiné à être utilisé pour l'implantation d'un implant dentaire (30), comprenant :
un guide d'implant (20) comprenant une extrémité proximale et une extrémité distale, dans lequel l'extrémité distale est configurée pour être fixée de manière amovible à un implant dentaire, ledit guide d'implant comprenant un corps cylindrique (22), dans lequel le corps cylindrique comprend une surface extérieure cylindrique (23) et une rainure (24) circonférentielle sur la surface extérieure, et
un gabarit (10) configuré pour être disposé à un emplacement prédéfini par rapport à une mâchoire,
dans lequel le gabarit comprend au moins un canal d'implantation (11) pour guider le corps cylindrique du guide d'implant dans une direction d'implantation souhaitée lors de l'implantation d'un implant dentaire dans la mâchoire, et une surface de butée (12) à une extrémité du canal d'implantation,
dans lequel le kit comprend un élément de butée (40) comprenant une première partie (41) et une deuxième partie (42), dans lequel la première partie et la deuxième partie sont configurées pour être mobiles entre un premier état, dans lequel la première partie et la deuxième partie sont espacées d'une première distance, et un deuxième état, dans lequel la première partie et la deuxième partie sont espacées d'une deuxième distance, dans lequel la première distance est inférieure à la deuxième distance, et dans lequel les première et deuxième parties sont sollicitées par rapport au premier état,
dans lequel la deuxième distance est identique ou supérieure à une distance entre des parties diamétralement opposées de la surface extérieure du guide d'implantation, de sorte qu'avant l'implantation, la première partie et la deuxième partie peuvent être disposées, dans le deuxième état, sur des côtés diamétralement opposés de la surface extérieure, et que lors du mouvement dans la direction d'implantation de l'implant dentaire (30) dans la mâchoire, la surface de butée (12) du canal d'implantation (11) pousse l'élément de butée (40) vers la rainure (24) jusqu'à ce que la rainure permette à la première et à la deuxième parties de se déplacer vers le premier état et que l'élément de butée soit pris par la rainure, bloquant ainsi tout mouvement ultérieur du guide d'implant (20) dans la direction d'implantation,
dans lequel le gabarit (10) est spécifique au patient et dans lequel un emplacement de la surface de butée (12) est choisi pour définir une profondeur d'implantation souhaitée d'un implant dentaire (30),
dans lequel la rainure (24) comprend un fond de rainure, et dans lequel la première distance entre la première partie et la deuxième partie est supérieure qu'un diamètre de rainure du fond de rainure, et
dans lequel la première partie (41) et la deuxième partie (42) ont une hauteur inférieure à la largeur d'une rainure de la rainure,
dans lequel la hauteur et la première distance sont choisies de telle sorte que le dégagement de la première partie (41) et de la deuxième partie (42) dans la rainure (24) indique que l'implant dentaire (30) est disposé à la profondeur d'implantation souhaitée et une position serrée de la première partie (41) et de la deuxième partie (42) dans la rainure (24) indique que l'implant dentaire (30) est trop enfoncé dans la mâchoire.

2. Kit tel que revendiqué dans l'une quelconque des revendications précédentes, dans lequel l'élément de butée (40) comprend une partie de connexion (43) reliant la première partie (41) et la deuxième partie (42).

3. Kit tel que revendiqué dans la revendication précédente, dans lequel la partie de connexion, la première partie (41) et la deuxième partie (42) ont une forme d'anneau ouvert.

4. Kit tel que revendiqué dans la revendication 2 ou 3, dans lequel l'élément de butée (40) comprend une première extension (44) s'étendant à partir de la première partie (41) et une seconde extension (45) s'étendant à partir de la deuxième partie (42),
dans lequel un mouvement de la première extension vers la deuxième extension entraîne le déplacement de la première et de la deuxième parties du premier état vers le deuxième état.

5. Kit tel que revendiqué dans l'une quelconque des revendications précédentes, dans lequel l'élément de butée (40) est constitué d'un matériau élastique.

6. Kit tel que revendiqué dans l'une quelconque des revendications précédentes, dans lequel la rainure (24) a une section transversale sensiblement rectangulaire.

7. Kit tel que revendiqué dans l'une quelconque des revendications précédentes, dans lequel la première partie (41) et la deuxième partie (42) ont chacune une section transversale sensiblement rectangulaire.

8. Kit tel que revendiqué dans l'une quelconque des revendications précédentes, comprenant un implant dentaire (30) à placer dans la mâchoire d'un patient.

9. Kit tel que revendiqué dans l'une quelconque des revendications précédentes, dans lequel l'élément de butée (40) et le guide d'implantation (20) sont fournis dans une ou plusieurs tailles standards.
